# EUROPÄISCHE PATENTSCHRIFT

(11) **EP 2 394 770 B1**
(45) Veröffentlichungstag und Bekanntmachung des Hinweises auf die Patenterteilung: **08.04.2020**
(21) Anmeldenummer: 11004665.3
(22) Anmeldetag: 08.06.2011
(51) Int. Cl.: B23F 23/12

(54) **Verfahren und Verzahnmaschine zum Herstellen einer Mehrzahl von identischen Zahnrädern mittels abspanender Bearbeitung sowie Ansteuerprogramm für eine Verzahnmaschine**
Method and machine for producing a number of identical gearwheels by machining and control programme for a machine
Procédé et machine de fabrication d'une multitude de roues dentées identiques à l'aide d'un traitement de démontage et un programme de commande pour une machine.

(30) Priorität: 14.06.2010 DE 102010023728
(43) Veröffentlichungstag der Anmeldung: 14.12.2011
(73) Patentinhaber: LIEBHERR-VERZAHNTECHNIK GmbH, 87437 Kempten (DE)
(72) Erfinder: Winkel, Oliver, Dr., 87435 Kempten (DE); Bodenmüller, Erwin, 87463 Dietmannsried (DE)
(74) Vertreter: Laufhütte, Dieter

(56) Entgegenhaltungen:
- DE-A1- 19 911 235
- DE-A1-102005 022 863
- US-A- 5 904 457
- US-A1- 2007 275 638
- US-A1- 2009 028 655
- US-B1- 6 450 740
- SCHRIEFER H: "Continuous CNC Gear Grinding", CONTINUOUS CNC GEAR GRINDING, XX, XX, 1. März 1996 (1996-03-01), Seiten 1-21, XP002109496,

## Beschreibung

Die vorliegende Erfindung betrifft ein Verfahren sowie eine Verzahnmaschine zum Herstellen einer Mehrzahl von identischen Zahnrädern mittels abspanender Bearbeitung. Insbesondere handelt es sich dabei um ein Verfahren zum Herstellen von Zahnrädern mittels Wälzfräsen oder Wälzschleifen. Bei der Verzahnmaschine handelt es sich dementsprechend um eine Wälzfräsmaschine und/oder eine Wälzschleifmaschine. Die vorliegende Erfindung betrifft ferner ein Ansteuerprogramm für eine Verzahnmaschine zur Durchführung des erfindungsgemäßen Verfahrens.

Bei dem erfindungsgemäßen Verfahren werden Werkstücke mittels eines rotierenden Werkzeugs, insbesondere mittels eines Wälzfräsers oder einer Schleifschnecke, bearbeitet, wobei das Werkzeug über die Ansteuerung von NC-Achsen der Verzahnmaschine mit dem Werkstück in Eingriff gebracht wird. Insbesondere sind dabei die Drehbewegung des Werkzeuges und des Werkstückes miteinander gekoppelt.

Dabei kann das Werkzeug im Verlauf der Bearbeitung mehrerer Werkstücke, und insbesondere bei einem Wechsel zwischen den Werkstücken, um eine gewisse Strecke entlang seiner Rotationsachse vershiftet werden, um eine andere Stelle des Werkzeugs mit dem Werkstück in Eingriff zu bringen. Dies dient primär dazu, das Werkzeug möglichst über seine gesamte Breite gleichmäßig zu belasten und den Verschleiß zu minimieren.

Durch die immer enger werdenden Toleranzen und die immer höheren Anforderungen an die Verzahngenauigkeit reichen die bisher eingesetzten Korrekturen nicht mehr aus, um den hohen Anforderungen an die Verzahngeometrie gerecht zu werden. Fehler im Werkzeug, Achsfluchtfehler, Rundlauffehler, Taumel, Geometriefehler und Fehler aus ungleichmäßiger Werkzeugerwärmung führen zu Abweichungen, die bei den geforderten Toleranzen ein Bestehen statistischer Prozessauswertungen erschweren bzw. verhindern können.

Aus der Veröffentlichung Schriefer H: "Continuous CNC Gear Grinding", 01.03.1996 ist eine klassische CNC-Wälzschleifmaschine zur Bearbeitung von Zahnrädern mit abrichtbaren Schleifwerkzeugen bekannt, welche mit einem Abrichter auf der Wälzschleifmaschine abgerichtet werden. Zudem werden Sonderverfahren zur topologischen Flankenlinienkorrektur am einzelnen Zahnrad beschrieben.

Aus der DE 199 11 235 A1 ist ein Verfahren zum Dialogwälzschleifen zur Erzeugung im Wesentlichen breitenballig modifizierter Verzahnungen bekannt. Durch die exakte Zuordnung einer bestimmten Breitenposition des Werkzeuges zu einer definierten Breitenposition des Werkstückes werden hier topologisch modifizierte Flanken einer Verzahnung erzeugt.

Aus der Druckschrift US 2007/0275638 A1 wird eine Shiftstrategie beim Wälzschleifen offenbart, wobei ein kleiner werdender Werkzeugdurchmesser beim Abrichten in einem modifizierten Shiftbetrag berücksichtigt wird.

Eine Vorrichtung zum Bearbeiten von Kegelrädern offenbart die Druckschrift US 2009/0028655 A1. In dem beschriebenen teilenden Verfahren sollen Teilungsfehler mit einem einzelnen Werkstück kompensiert werden.

Aus der US 5,904,457 ist ein Verfahren zum Vermessen von Verzahnungen, die in einer Maschine in Serie gefertigt werden, bekannt. Insbesondere soll aus den gemessenen Werkstücktemperaturen Rückschlüsse auf den Verschleißzustand des Werkzeuges gezogen werden.

Ein Verfahren zum Messen des Kugelmaßes von verzahnten Werkstücken ist aus der DE 10 2005 022 863 A1 bekannt. In dieser Druckschrift geht es um den Messvorgang selbst und die Korrektur des Achsabstandes zwischen Werkzeug und Werkstück nach einem gemessenen Kugelmaß.

Der Oberbegriff der Ansprüche 1 und 9 basiert auf US 6,450,740 B1.

Aufgabe der vorliegenden Erfindung ist es daher, ein Verfahren zum Herstellen von Zahnrädern zur Verfügung zu stellen, welches eine noch höhere Genauigkeit bei der Herstellung von Zahnrädern erlaubt.

Erfindungsgemäß wird diese Aufgabe durch ein Verfahren gemäß Anspruch 1, eine Verzahnmaschine gemäß Anspruch 9 und ein Ansteuerprogramm gemäß Anspruch 10 gelöst.

Die vorliegende Erfindung umfaßt dabei ein Verfahren zum Herstellen einer Mehrzahl von identischen Zahnrädern mittels abspanender Bearbeitung auf einer Verzahnmaschine, bei welchem Werkstücke mittels eines rotierenden Werkzeugs bearbeitet werden. Dabei wird das Werkzeug über die Ansteuerung von NC-Achsen der Verzahnmaschine mit dem Werkstück in Eingriff gebracht. Erfindungsgemäß ist dabei vorgesehen, daß Abweichungen von Werkstück zu Werkstück durch eine jeweils unterschiedliche Ansteuerung zumindest einer der NC-Achsen der Verzahnmaschine ausgeglichen werden. NC-Achsen im Sinne der Erfindung sind dabei alle Freiheitsgrade der Verzahnmaschine. Bei diesen NC-Achsen kann es sich dabei insbesondere um den Achsabstand zwischen Werkzeug und Werkstück und/oder den Anstellwinkel des Werkzeuges handeln. Das vorliegende Verfahren dient dabei vorteilhafterweise der Herstellung einer Mehrzahl von identischen Zahnrädern unter Verwendung desselben Werkzeuges.

Während bekannte Verfahren zur Korrektur von Verzahngeometrie-Abweichungen auf die Bearbeitung des einzelnen Werkstücks ausgelegt sind, werden durch das erfindungsgemäße Verfahren Abweichungen von Werkstück zu Werkstück vermieden, welche ansonsten z. B. durch das Vershiften des Werkzeugs hervorgerufen würden. Insbesondere können so Abweichungen von Werkstück zu Werkstück, welche durch die unterschiedliche Shift-Position bei der Bearbeitung des jeweiligen Werkstücks hervorgerufen würden, ausgeglichen werden. Vorteilhafterweise erfolgt die Herstellung der Mehrzahl an Werkstücken dabei automatisiert, wobei insbesondere die Ansteuerung der NC-Achsen der Maschine automatisch erfolgt.

Erfindungsgemäß wird dabei im Verlauf der Bearbeitung mehrerer Werkstücke und insbesondere bei einem Wechsel zwischen Werkstücken das Werkzeug um eine gewisse Strecke entlang seiner Rotationsachse vershiftet, um eine andere Stelle des Werkzeugs mit dem Werkstück in Eingriff zu bringen. Insbesondere kann dabei jedes Werkstück bei einer festen, jedoch von Werkstück zu Werkstück unterschiedlichen Shift-Position bearbeitet werden. Die vorliegende Erfindung kann jedoch auch bei Verfahren eingesetzt werden, bei welchen ein kontinuierliches Vershiften des Werkzeugs bei der Bearbeitung eines Werkstückes erfolgt, wie z. B. beim Diagonalfräsen.

Erfindungsgemäß ist dabei vorgesehen, daß die Ansteuerung zumindest einer der NC-Achsen der Verzahnmaschine beim Bearbeiten der Werkstücke in Abhängigkeit von der Shift-Position des Werkzeugs erfolgt. Insbesondere wird dabei der Abstand der Achsen von Werkzeug und Werkstück in Abhängigkeit von der Shift-Position angesteuert. Weiterhin besteht die Möglichkeit, zusätzlich weitere Achsen wie z.B. die Tischdrehbewegung und die Shift-Achse mit anzusteuern.

Durch das erfindungsgemäße Verfahren können daher Abweichungen der Werkzeuggeometrie von der Sollgeometrie, welche entlang der Rotationsachse des Werkzeugs auftreten und beim Shiften daher zu Abweichungen zwischen den einzelnen Werkstücken führen würden, berücksichtigt und deren Einfluß auf die Verzahngeometrie ausgeglichen werden, indem die NC-Achsen in Abhängigkeit von der Shift-Position und damit von Werkstück zu Werkstück unterschiedlich angesteuert werden.

Das vorliegende Verfahren kann dabei insbesondere beim Einsatz von solchen Werkzeugen zum Einsatz kommen, welche entlang ihrer Rotationsachse eine gleichbleibende Soll-Geometrie aufweisen. Bei bekannten Verfahren verlief die Ansteuerung der übrigen NC-Achsen bei solchen Werkzeugen unabhängig von der Shift-Position des Werkzeugs. Erfindungsgemäß können dagegen durch eine von der Shift-Position des Werkzeugs abhängige Ansteuerung der NC-Achsen Abweichungen zwischen der Verzahngeometrie der einzelnen Werkstücke durch die bei der Herstellung der einzelnen Werkstücken unterschiedliche Shift-Position, welche trotz der gleichbleibenden Soll-Geometrie des Werkzeuges auftreten, ausgeglichen werden.

Bei den Abweichungen der Werkzeuggeometrie in Shift-Richtung, d.h. entlang der Rotationsachse des Werkzeugs, kann es sich dabei um temperaturbedingte Abweichungen aufgrund des Verfahrensablaufs bzw. der Erwärmung, um herstellungsbedingte Abweichungen der Werkzeuggeometrie von der Sollgeometrie, um Aufspannfehler des Werkzeuges wie Rundlauffehler oder Taumel, sowie um Fehler in der Maschinengeometrie wie z.B. Fluchtungsfehler des Gegenlagers handeln.

Weiterhin werden erfindungsgemäß Abweichungen der Werkzeuggeometrie in Shift-Richtung und/oder deren Einfluß auf die Verzahngeometrie bestimmt. Insbesondere können dabei Abweichungen der Werkzeuggeometrie direkt bestimmt werden oder Abweichungen der Werkstückgeometrie in Abhängigkeit von der bei der Herstellung eingesetzten Shift-Position bestimmt werden. Diese Abweichungen gehen dann in die Ansteuerung der NC-Achsen in Abhängigkeit von der Shift-Position des Werkzeugs ein.

Vorteilhafterweise handelt es sich bei dem erfindungsgemäßen Verfahren um ein Wälzfräsverfahren oder ein Wälzschleifverfahren. Bei dem Werkzeug handelt es sich demgemäß vorteilhafterweise um einen Wälzfräser oder eine Schleifschnecke.

Das erfindungsgemäße Verfahren kann dabei bei jeder Shift-Strategie eingesetzt werden. Weiterhin kann die vorliegende Erfindung bei jedem Bearbeitungsverfahren, bei welchem die Shift-Position einen Einfluß auf das Bearbeitungsergebnis haben kann, zum Einsatz kommen, z.B. bei der Diagonalbearbeitung.

Erfindungsgemäß kann vorgesehen sein, daß die Werkzeuggeometrie und/oder deren Einfluß auf die Verzahngeometrie an mindestens zwei Stützpunkten, welche verschiedenen Shift-Positionen des Werkzeugs entsprechen, bestimmt wird.

Vorteilhafterweise wird dabei zur Ansteuerung der NC-Achsen der Verzahnmaschine die Werkzeuggeometrie und/oder deren Einfluß auf die Verzahngeometrie über den Shift-Bereich des Werkzeugs anhand der mindestens zwei Stützpunkte interpoliert. Je mehr Stützpunkte dabei eingesetzt werden, desto genauer kann durch die Interpolation die tatsächliche Situation erfaßt und berücksichtigt werden.

Vorteilhafterweise kann dabei vorgesehen sein, daß zu Beginn eines Bearbeitungszyklus an mindestens zwei, vorteilhafterweise drei Shift-Positionen des Werkzeugs jeweils mindestens ein Werkstück bearbeitet und vermessen wird. Die hierdurch gewonnenen Meßdaten können im darauffolgenden Bearbeitungszyklus in die Ansteuerung der NC-Achsen eingehen. Hierdurch kann der Einfluß von Abweichungen der Werkzeuggeometrie auf die Verzahngeometrie, welche durch die unterschiedlichen Shift-Positionen bei Bearbeitung der einzelnen Werkstücke entstehen, ausgeglichen werden.

Alternativ oder zusätzlich können auch Daten zur Verzahngeometrie in Abhängigkeit von der Shift-Position aus der vorangegangen laufenden Prozessauswertung in die Ansteuerung der NC-Achsen eingehen. Insbesondere kann dabei bei der statistischen Auswertung der Verzahngeometrie der einzelnen Werkstücke ein wiederkehrendes Muster in Abhängigkeit von der Shift-Position bestimmt werden, welches dann in die Ansteuerung der NC-Achsen eingeht. Hierdurch kann die Verzahngeometrie während des Prozesses erheblich verbessert werden.

Bei den oben beschriebenen Varianten wurden nicht die Abweichungen der Werkzeuggeometrie in Shift-Richtung selbst bestimmt, sondern deren Einfluß auf die Verzahngeometrie, indem die mit unterschiedlichen Shift-Positionen bearbeiteten Werkstücke vermessen wurden.

Alternativ oder zusätzlich können jedoch auch durch eine Vermessung des Werkzeugs Daten zu Abweichungen der Werkzeuggeometrie entlang seiner Rotationsachse erhalten werden, welche dann in die Ansteuerung der NC-Achsen eingehen. Insbesondere können dabei auf einer Meßmaschine ermittelte Steigungsabweichungen des Werkzeugs in die Steuerung eingehen.

Die vorliegende Erfindung betrifft weiterhin eine Verzahnmaschine zum Herstellen von Zahnrädern mittels abspanender Bearbeitung. Insbesondere handelt es sich dabei um eine Wälzfräsmaschine und/oder eine Wälzschleifmaschine. Die erfindungsgemäße Verzahnmaschine weist dabei eine Werkzeugaufnahme und eine Werkstückaufnahme, welche jeweils mittels NC-Achsen ansteuerbar sind, wobei Werkstücke mittels eines rotierenden Werkzeugs bearbeitet werden können, welches über die Ansteuerung von NC-Achsen der Verzahnmaschine mit dem Werkstück in Eingriff gebracht wird. Die Verzahnmaschine weist dabei eine Maschinensteuerung auf, welche die automatische Herstellung einer Mehrzahl von identischen Zahnrädern ermöglicht. Dabei ist ferner vorgesehen, daß die Maschinensteuerung eine Korrekturfunktion aufweist, durch welche Abweichungen von Werkstück zu Werkstück durch eine jeweils unterschiedliche Ansteuerung zumindest einer der NC-Achsen der Verzahnmaschine ausgeglichen werden.

Auch durch die erfindungsgemäße Korrekturfunktion können so Abweichungen von Werkstück zu Werkstück, welche z.B. durch Abweichungen der Werkzeuggeometrie entlang der Rotationsachse, welche z.B. durch Erwärmung des Werkzeuges, eine aufgrund von Herstellungsfehlern unterschiedliche Geometrie des Werkzeugs je nach dessen Shift-Position, Aufspannfehler des Werkzeuges und Geometriefehler der Maschine entstehen könnten, ausgeglichen werden.

Erfindungsgemäß umfaßt die Maschinensteuerung ferner eine Shift-Funktion, durch welche das Werkzeug im Verlauf der Bearbeitung mehrerer Werkstücke, und insbesondere bei einem Wechsel zwischen Werkstücken, um eine gewisse Strecke entlang seiner Rotationsachse vershiftet werden kann, um eine andere Stelle des Werkzeugs mit dem Werkstück in Eingriff zu bringen. Erfindungsgemäß weist die Maschinensteuerung nun eine Korrekturfunktion auf, durch welche die unterschiedliche Ansteuerung zumindest einer der NC-Achsen der Verzahnmaschine in Abhängigkeit von der jeweiligen Shift-Position des Werkzeugs erfolgt. Hierdurch kann der Einfluß von Abweichungen der Werkzeuggeometrie entlang der Rotationsachse auf die Verzahngeometrie durch eine Ansteuerung der NC-Achsen der Verzahnmaschine in Abhängigkeit von der Shift-Position des Werkzeugs ausgeglichen werden. Erfindungsgemäß sind dabei Abweichungen der Werkzeuggeometrie in Shift-Richtung und/oder deren Einfluß auf die Verzahngeometrie bestimmbar.

Vorteilhafterweise kann auf der Verzahnmaschine dabei ein Verfahren durchgeführt werden, wie es oben beschrieben wurde. Vorteilhafterweise weist die Maschinensteuerung hierfür entsprechende Funktionen auf, insbesondere eine entsprechende Bedienerführung.

Vorteilhafterweise weist die Verzahnmaschine dabei eine Eingabefunktion auf, durch welche Meßdaten für mindestens zwei Stützpunkte, welche verschiedenen Shift-Positionen des Werkzeugs entsprechen, eingegeben werden können. Die Eingabe kann dabei manuell oder elektronisch erfolgen.

Vorteilhafterweise ist dabei vorgesehen, daß die unterschiedlichen Shift-Positionen des Werkzeugs automatisch von der Eingabefunktion angefahren werden, so daß an diesen Stützpunkten Werkstücke bearbeitet werden können, deren Werkzeuggeometrie wiederum als Meßdaten in die Eingabefunktion eingegeben werden können. Vorteilhafterweise weist die erfindungsgemäße Verzahnmaschine hierfür eine entsprechende Benutzerführung auf.

Vorteilhafterweise interpoliert die Maschinensteuerung dabei zur Ansteuerung der NC-Achsen der Verzahnmaschine in Abhängigkeit von der Shift-Position die Meßdaten zu den mindestens zwei Stützpunkten.

Weiterhin wäre es möglich, durch die Vorgabe von bestimmten Korrekturfunktionen wie z.B. Splines, Polynome, Sinuskurven, Rechteckfunktionen oder ähnlichem Korrekturen vorzugeben.

Alternativ oder zusätzlich kann vorgesehen sein, daß durch die Eingabefunktion Meßdaten eines Meßgerätes, über welches Abweichungen der Werkzeuggeometrie entlang der Rotationsachse und/oder deren Einfluß auf die Verzahngeometrie eingelesen werden können.

Bei dem Meßgerät kann es sich dabei um ein Meßgerät zum Vermessen einer Werkzeuggeometrie und/oder einer Verzahngeometrie handeln. Insbesondere handelt es sich dabei um ein Meßgerät zum Bestimmen der Werkzeuggeometrie in Abhängigkeit von der Shift-Position des Werkzeugs, insbesondere um eine Meßmaschine zur Ermittlung von Steigungsabweichungen eines Wälzfräsers.

Vorteilhafterweise kann die Datenübertragung dabei elektronisch erfolgen. Dies ermöglicht eine besonders einfache Datenübertragung.

Bei dem erfindungsgemäßen Verfahren bzw. bei der entsprechenden Maschinensteuerung können dabei als Meßwerte für die Zahngeometrie z.B. das Zahnweitenmaß und/oder das Kugelmaß eingesetzt werden. Es können jedoch auch weitere verzahnungsspezifische Maße wie z.B. der Fußkreisdurchmesser oder der Außendurchmesser berücksichtigt werden.

Die vorliegende Erfindung umfaßt dabei weiterhin ein Ansteuerprogramm für eine Verzahnmaschine zur Durchführung eines Verfahrens, wie es oben dargestellt wurde. Insbesondere kann ein solches Ansteuerprogramm dabei auf der Maschinensteuerung einer Verzahnmaschine installiert werden und ermöglicht einer Bedienperson durch die Bereitstellung entsprechender Funktionen die Durchführung eines erfindungsgemäßen Verfahrens. Das Ansteuerprogramm kann dabei beispielsweise auf einem Datenträger zur Verfügung gestellt werden.

Die vorliegende Erfindung wird nun anhand eines Ausführungsbeispiels sowie Zeichnungen näher dargestellt. Dabei zeigen:
- Figur 1:: ein Ausführungsbeispiel einer erfindungsgemäßen Verzahnmaschine,
- Figur 2:: die Prinzipdarstellung eines erfindungsgemäß zum Einsatz kommenden Fein-Shiftverfahrens,
- Figur 3:: die Prinzipdarstellung eines erfindungsgemäß zum Einsatz kommenden Multizyklus-Shiftverfahrens,
- Figur 4:: ein Diagramm, welches Abweichungen der Verzahngeometrie in Abhängigkeit von der Shift-Position des Werkzeugs zeigt und
- Figur 5:: ein Diagramm, welches Abweichungen der Verzahngeometrie von Werkstück zu Werkstück in einem Produktionsprozeß beim Multizyklus-Shiften zeigt.

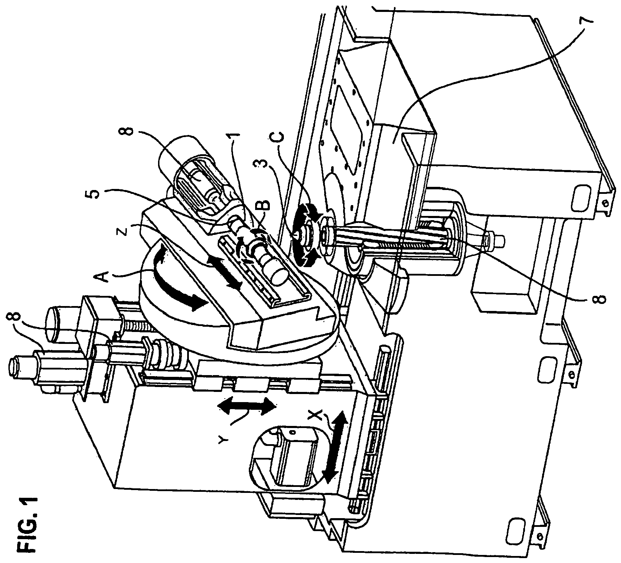

Figur 1 zeigt ein Ausführungsbeispiel einer erfindungsgemäßen Verzahnmaschine. Die Verzahnmaschine weist dabei eine Werkzeugaufnahme 5 auf, über welche ein Werkzeug 1 eingespannt werden kann. Dabei ist ein Antrieb 8 vorgesehen, über welchen das Werkzeug um seine Rotationsachse in Drehrichtung B angetrieben wird. Die Verzahnmaschine weist weiterhin eine Werkstückaufnahme 3 auf, über welche ein Werkstück eingespannt werden kann. Auch die Werkstückaufnahme kann über einen Antrieb 8 in Drehrichtung C gedreht werden.

Das Anstellen des Werkzeugs 1 an das Werkstück erfolgt dabei entlang des Freiheitsgrades X, durch welchen der Achsabstand zwischen der Werkstückaufnahme 3 und der Werkzeugaufnahme 1 eingestellt werden kann. Durch ein Verschieben entlang des Freiheitsgrades Y kann das Werkzeug 1 parallel zur Drehachse der Werkstückaufnahme 3 bewegt werden, das heißt in Zahnbreitenrichtung. Weiterhin erlaubt die Verzahnmaschine ein Verdrehen des Werkzeugs 1 in Drehrichtung A, um z.B. Schrägverzahnungen zu ermöglichen.

Vorteilhafterweise handelt es sich bei der Verzahnmaschine dabei um eine Wälzfräsmaschine oder eine Wälzschleifmaschine. Beim Wälzfräsen oder -schleifen ist die Drehbewegung B des Werkzeugs 1 mit der Drehung C des Werkstückes an der Werkstückaufnahme gekoppelt, so daß die Werkzeuggeometrie auf der Verzahngeometrie des Werkstückes abwälzt.

Um unterschiedliche Stellen des Werkzeugs mit dem Werkstück in Eingriff zu bringen und so die Prozeßenergie besser auf das Werkzeug verteilen zu können, ist die Werkzeugaufnahme 5 parallel zur Rotationsachse des Werkzeugs entlang der Achse Z verschiebbar. Ein solches Verschieben des Werkzeugs entlang der Achse Z wird Vershiften genannt.

Beim Vershiften wird bei der Bearbeitung mehrerer Werkstücke das Werkzeug insbesondere jeweils beim Wechsel zwischen zwei Werkstücken um eine gewisse Strecke entlang seiner Rotationsachse, das heißt in Richtung Z vershiftet, um eine andere Stelle des Werkzeugs mit dem Werkstück in Eingriff zu bringen. Das Werkzeug weist dabei entlang seiner Rotationsachse eine gleichbleibende Soll-Geometrie auf.

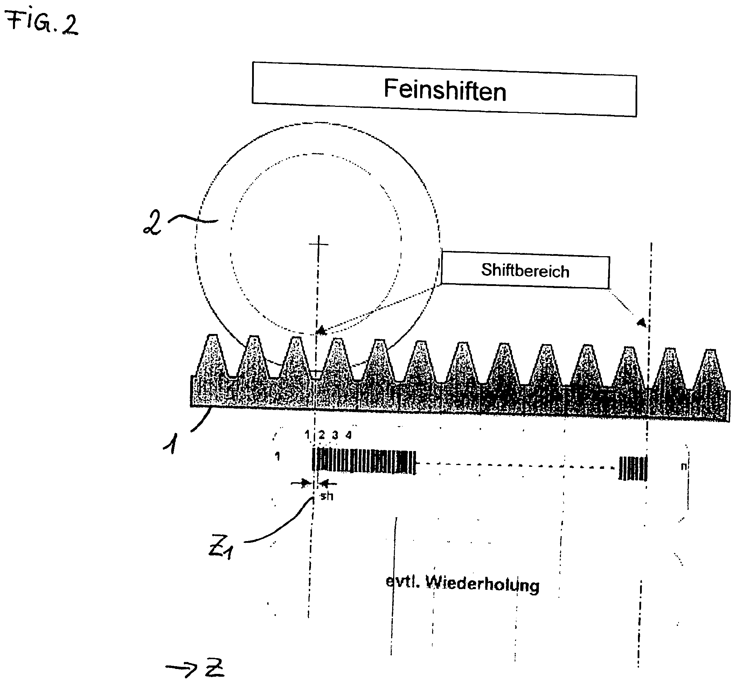

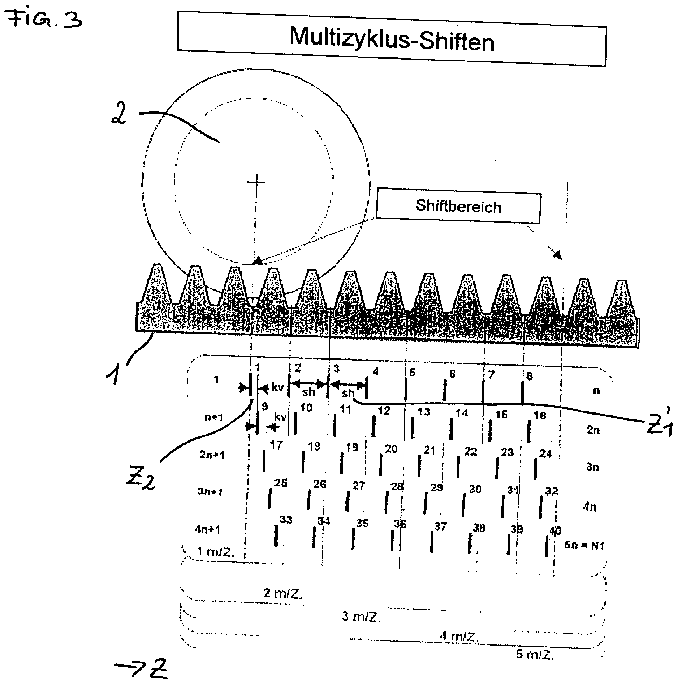

In Figuren 2 und 3 sind zwei unterschiedliche Shift-Strategien gezeigt, wie sie bei dem erfindungsgemäßen Verfahren zum Einsatz kommen können. Bei dem in Figur 2 gezeigten Fein-Shiften erfolgt nach Bearbeitung eines Werkstücks 2 nur ein sehr kleiner Shift-Sprung z1, so daß das Werkzeug 1 während des Herstellungsprozesses nur sehr langsam von Werkstück zu Werkstück vershiftet wird. Der Vorteil dieses Vorgehens ist es, daß die anzuwendende Shift-Strategie äußerst einfach berechnet werden kann. Bei dem in Figur 3 gezeigten Multizyklus-Shiften erfolgt dagegen nach Bearbeitung eines Werkstücks ein relativ großer Shift-Sprung z1', welcher typischerweise der Axialteilung der Verzahnung des Werkzeuges oder einem vielfachen davon entspricht. Nach jedem Durchgang über den gesamten Shift-Bereich wird das Verfahren wiederholt, wobei jedoch ein kleiner Versatz z2 zu den Positionen im vorangegangenen Durchgang vorgenommen wird. Dabei kann bei beiden Shift-Strategien das erfindungsgemäße Verfahren in gleicher Weise zum Einsatz kommen.

Durch die vorliegende Erfindung können diese Abweichungen, welche durch die unterschiedliche Shiftposition entstehen, kompensiert bzw. durch eine entsprechende Ansteuerung der NC-Achsen ausgeglichen werden. Hierzu können beispielsweise Werte aus einer bereits erfolgten statistischen Prozeßauswertung in die Maschinensteuerung eingegeben werden. Zusätzlich oder alternativ ist es möglich, Werkstücke gezielt an bestimmten Positionen zu erzeugen und deren Meßergebnisse in die Maschinensteuerung einzugeben. Auch Meßergebnisse aus einem Werkzeugmeßprotokoll können zur Korrektur von Steigungsabweichungen eingesetzt werden. Hierfür weist die Maschinensteuerung entsprechende softwaretechnische Funktionen auf.

Die Abweichung der Werkzeuggeometrie von der Soll-Geometrie in Shift-Richtung bzw. deren Einfluß auf die Verzahngeometrie wird dabei erfindungsgemäß ausgeglichen, in dem die Ansteuerung der NC-Achsen der Verzahnmaschine in Abhängigkeit von der Shift-Position erfolgt. Insbesondere werden dabei gezielt Änderungen am Achsabstand zwischen Werkstück und Werkzeug in Abhängigkeit von der Shift-Position vorgenommen. Hierdurch können Abweichungen zwischen den einzelnen Werkstücken, welche an jeweils unterschiedlichen Shift-Positionen hergestellt wurden, ausgeglichen bzw. minimiert werden. Dabei können sowohl Abweichungen der Werkzeuggeometrie von der Soll-Geometrie aufgrund von Steigungsabweichungen am Werkzeug, aufgrund von Temperaturänderungen am Werkzeug oder Werkstück, aufgrund von Aufspannfehlern und aufgrund von Geometriefehlern der Maschine ausgeglichen werden, indem die Position des Werkzeugs in X-Richtung in Abhängigkeit von der Shift-Position in Z-Richtung bestimmt wird, insbesondere individuell für jedes Werkstück.

Das erfindungsgemäße Verfahren, welches eine besonders gleichmäßige Verzahngeometrie von Werkstück zu Werkstück ermöglicht, kann dabei selbstverständlich mit bekannten Verfahren zum Korrigieren der Verzahngeometrie einzelner Werkstücke kombiniert werden.

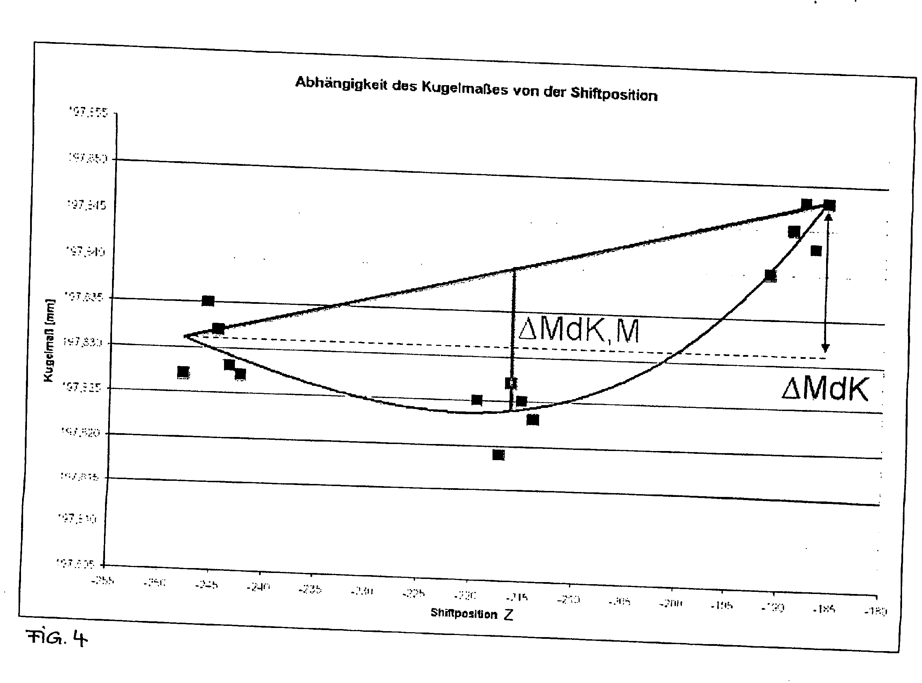

Anhand von Figur 4 wird nun ein erstes Ausführungsbeispiel der vorliegenden Erfindung dargestellt, bei welchem Abweichungen der Verzahngeometrie beim Shiften, welche durch Steigungsabweichungen im Werkzeug hervorgerufen werden, kompensiert werden. Dabei können Steigungsabweichungen im Werkzeug zu Schwankungen der Zahndicke entlang des Werkzeuges führen, welche sich durch Shiften auch in den Werkstücken als Zahndickenänderung (bzw. Kugelmaßänderung) oder Zahnweitenänderung abbilden. Die Kompensation dieser Zahndickenvariation erfolgt erfindungsgemäß über ein entsprechendes Anstellen der X-Achse in Abhängigkeit von der Shift-Position.

Hierfür ist zunächst der Betrag der Zahndickenänderung anhand des Kugelmaßes oder der Zahnweite für den gesamten Shift-Bereich zu ermitteln. Hierfür wird das Kugelmaß bzw. die Zahnweite an einzelnen Stützpunkten über den Shift-Bereich ermittelt, und eine entsprechende Interpolation durchgeführt. Bei einer linearen Interpolation ist das Maß am Shiftanfang und am Shiftende durch Bearbeiten und Messen eines oder mehrerer Werkstücke zu ermitteln. Bei parabelförmiger Interpolation wird bzw. werden zusätzlich ein oder mehrere Werkstücke in der Mitte des Shift-Bereiches bearbeitet und ausgewertet. Selbstverständlich sind auch noch mehr Stützpunkte möglich. Vorteilhafterweise werden die Shift-Positionen zur Bereitstellung der Daten von der Maschinensteuerung vorgeschlagen.

Die für die jeweiligen Shift-Positionen gemessenen Werte werden vom Bediener in die Maschinensteuerung eingegeben, wofür eine entsprechende Eingabefunktion vorgesehen ist. Aus diesen Werten errechnet die Steuerung die erforderlichen Korrekturen in X-Richtung in Abhängigkeit der Shift-Position und berücksichtigt diese beim Herstellen der Zahnräder in der darauffolgenden Produktion. Die Eingabefunktion ist dabei so ausgeführt, daß die Eingabe der Meßwerte wahlweise über das Kugelmaß oder die Zahnweite möglich ist. Alternativ können' auch andere verzahnungsspezifische Werte verwendet werden.

Die eingegebenen Werte werden dabei mit dem programmierten Sollwert (z. B. Sollkugelmaß) verglichen und zur Achsabstandskorrektur herangezogen. Dabei kann vorgesehen sein, daß die Maschine auf einer Anzeige die maximalen Abweichungen und/oder den Verlauf der Abweichung über den Shift-Bereich darstellt, insbesondere graphisch. Weiterhin kann vorgesehen sein, daß das Anfahren und Bearbeiten der mehreren Werkstücke zur Bereitstellung der Stützpunkte von der Maschine automatisch vorgenommen wird.

Weiterhin kann vorgesehen sein, daß über eine Meßmaschine ermittelte Steigungsabweichungen des Werkzeuges in die Maschinensteuerung eingelesen bzw. eingegeben werden können. Die Maschinensteuerung errechnet hieraus die notwendigen Korrekturen in X-Richtung, um die Auswirkung der Abweichung der Werkzeuggeometrie von der Soll-Geometrie, das heißt die eigentlich aus diesen Abweichungen resultierenden Zahndickenschwankungen am Werkstück, auszugleichen.

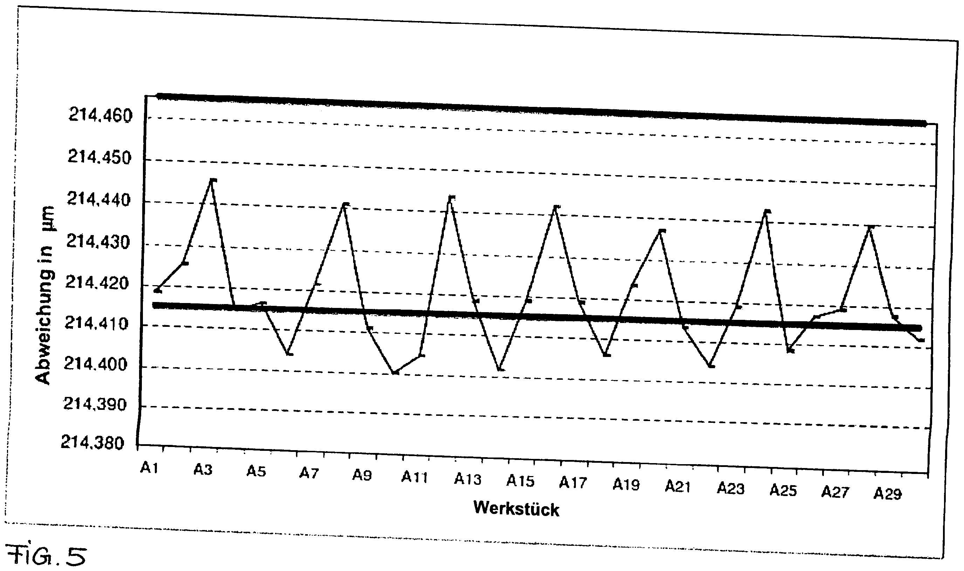

Anhand von Figur 5 soll nun ein zweites Ausführungsbeispiel des erfindungsgemäßen Verfahrens dargestellt werden. Dabei wird ein verzahnungsspezifischer Parameter der Werkstücke über den Produktionsprozeß gemessen und statistisch erfaßt. In Figur 5 ist dabei die Abweichung vom Kugelmaß in µm für die Werkstücke A1 bis A29 aufgetragen. Wie aus dem Bild ersichtlich, ist dabei ein Sägezahnverlauf gegeben, welcher sich beim eingesetzten Multizyklus-Shiften mit jedem Shift-Durchgang wiederholt. Der gleiche Effekt ist jedoch auch beim konventionellen Fein-Shiften vorhanden, wobei sich die Abweichungen jedoch über eine größere Anzahl von Werkstücken verteilen, das heißt der Sägezahn erheblich breiter ist bzw. sich in Form einer Rampe darstellt.

Erfindungsgemäß können nun die Meßdaten zu den bereits bearbeiteten Werkstücken ausgewertet und im darauffolgenden Bearbeitungszyklus in die Ansteuerung der NC-Achsen eingehen. Insbesondere kann dabei eine Veränderung des X-Abstands in Abhängigkeit von der Shift-Position vorgenommen werden, wobei der Zusammenhang zwischen Shift-Position und X-Abstand aus der Statistik der bereits bearbeiteten Werkstücke entnommen wird. Die Ansteuerung der X-Position des Werkzeugs erfolgt dabei umgekehrt zu dem in Figur 5 sichtbaren Sägezahnmuster, so daß die unterschiedlichen Achsabstände die Abweichungen von der Soll-Verzahngeometrie ausgleichen.

Die gezielte Herstellung von Werkstücken an unterschiedlichen Stützpunkten, die Berücksichtigung von statistisch erfaßten Werten und/oder die Vermessung des Werkzeuges können dabei auch kombiniert werden.

Das erfindungsgemäße Verfahren, bei welchem von Werkstück zu Werkstück ein unterschiedlicher Zustellabstand des Werkzeugs eingesetzt wird, ermöglicht dabei eine hervorragende Verzahngeometrie über den gesamten Produktionsvorgang hinweg. Anders als bei bekannten Verfahren, welche sich auf Korrekturen an einem einzelnen Werkstück beziehen, kann so insgesamt die Verzahnqualität erheblich verbessert werden.

## Patentansprüche

1. Verfahren zum Herstellen einer Mehrzahl von identischen Zahnrädern mittels abspanender Bearbeitung, insbesondere Wälzfräsen oder Wälzschleifen, auf einer Verzahnmaschine, wobei Werkstücke mittels eines rotierenden Werkzeugs (1) bearbeitet werden, welches über die Ansteuerung von NC-Achsen (X,Y,Z,A,B,C) der Verzahnmaschine mit dem Werkstück in Eingriff gebracht wird, und Abweichungen von Werkstück zu Werkstück durch eine jeweils unterschiedliche Ansteuerung zumindest einer der NC-Achsen (X) der Verzahnmaschine ausgeglichen werden, wobei das Werkzeug (1) im Verlauf der Bearbeitung mehrerer Werkstücke, und insbesondere bei einem Wechsel zwischen Werkstücken, um eine gewisse Strecke (Z) entlang seiner Rotationsachse vershiftet wird, um eine andere Stelle des Werkzeugs mit dem Werkstück in Eingriff zu bringen,
**dadurch gekennzeichnet,**
**dass** die unterschiedliche Ansteuerung zumindest einer der anderen NC-Achsen der Verzahnmaschine beim Bearbeiten der Werkstücke in Abhängigkeit von der jeweiligen Shift-Position des Werkzeugs erfolgt, wobei Abweichungen der Werkzeuggeometrie in Shift-Richtung und/oder deren Einfluß auf die Verzahngeometrie bestimmt werden.

2. Verfahren nach Anspruch 1, wobei Abweichungen der Werkzeuggeometrie in Shift-Richtung und/oder deren Einfluß auf die Verzahngeometrie hinsichtlich der Zahndicke bestimmt werden.

3. Verfahren nach Anspruch 1 oder 2, wobei die Werkzeuggeometrie und/oder deren Einfluß auf die Verzahngeometrie an mindestens zwei Stützpunkten, welche verschiedenen Shift-Positionen des Werkzeugs entsprechen, bestimmt wird, wobei vorteilhafterweise zur Ansteuerung der NC-Achsen der Verzahnmaschine die Werkzeuggeometrie und/oder deren Einfluß auf die Verzahngeometrie über den Shift-Bereich des Werkzeugs anhand der mindestens zwei Stützpunkte interpoliert wird.

4. Verfahren nach Anspruch 1, 2 oder 3, wobei die Werkzeuggeometrie und/oder deren Einfluß auf die Verzahngeometrie durch Eingabe einer Funktion, z.B. einer Gerade, Parabel, Sinus, Polynom oder einer Kombination hieraus, als Funktion der Shift-Position eingegeben wird, wobei diese zur Berechnung der Korrekturfunktion für die Ansteuerung der NC-Achsen der Verzahnmaschine herangezogen wird.

5. Verfahren nach einem der vorangegangenen Ansprüche, wobei zusätzlich zu der Ansteuerung zum Ausgleich von Abweichungen von Werkstück zu Werkstück eine Korrektur der Verzahngeometrie des einzelnen Werkstücks vorgenommen wird.

6. Verfahren nach einem der vorangegangenen Ansprüche, wobei zu Beginn eines Bearbeitungszyklus an mindestens zwei, vorteilhafterweise drei Shift-Positionen des Werkzeugs jeweils mindestens ein Werkstück bearbeitet und vermessen wird, und wobei die Meßdaten im darauffolgenden Bearbeitungszyklus in die Ansteuerung der NC-Achsen eingehen.

7. Verfahren nach einem der vorangegangenen Ansprüche, wobei Daten zur Verzahngeometrie in Abhängigkeit von der Shiftposition aus der vorangegangen laufenden Prozessauswertung in die Ansteuerung der NC-Achsen eingehen.

8. Verfahren nach einem der vorangegangenen Ansprüche, wobei durch eine Vermessung des Werkzeugs erhaltene Daten zu Abweichungen der Werkzeuggeometrie entlang seiner Rotationsachse in die Ansteuerung der NC-Achsen eingehen.

9. Verzahnmaschine zum Herstellen von Zahnrädern mittels abspanender Bearbeitung, insbesondere Verzahnfräsmaschine und/oder Verzahnschleifmaschine, insbesondere zum Durchführen eines Verfahrens nach einem der vorangegangenen Ansprüche,
mit einer Werkzeugaufnahme (5) und einer Werkstückaufnahme (3), welche jeweils mittels NC-Achsen (X,Y,Z,A,B,C) ansteuerbar sind, wobei Werkstücke mittels eines rotierenden Werkzeugs (1) bearbeitet werden können, welches über die Ansteuerung von NC-Achsen der Verzahnmaschine mit dem Werkstück in Eingriff gebracht wird,
mit einer Maschinensteuerung, welche die automatische Herstellung einer Mehrzahl von identischen Zahnrädern ermöglicht,
wobei die Maschinensteuerung eine Korrekturfunktion aufweist, durch welche Abweichungen von Werkstück zu Werkstück durch eine jeweils unterschiedliche Ansteuerung zumindest einer der NC-Achsen der Verzahnmaschine ausgeglichen werden,
wobei die Maschinensteuerung eine Shift-Funktion aufweist, durch welche das Werkzeug im Verlauf der Bearbeitung mehrerer Werkstücke, und insbesondere bei einem Wechsel zwischen Werkstücken, um eine gewisse Strecke entlang seiner Rotationsachse vershiftet werden kann, um eine andere Stelle des Werkzeugs mit dem Werkstück in Eingriff zu bringen,
**dadurch gekennzeichnet,**
**dass** durch die Korrekturfunktion die unterschiedliche Ansteuerung zumindest einer der anderen NC-Achsen der Verzahnmaschine in Abhängigkeit von der jeweiligen Shift-Position des Werkzeugs erfolgt, wobei Abweichungen der Werkzeuggeometrie in Shift-Richtung und/oder deren Einfluß auf die Verzahngeometrie bestimmbar sind.

10. Ansteuerprogramm für eine Verzahnmaschine zur Durchführung eines Verfahrens nach einem der Ansprüche 1 bis 8.

## Claims

1. A method of manufacturing a multiple of identical gears by means of cutting machining, in particular hob cutting or hob grinding, on a gear cutting machine, wherein workpieces are machined by means of a rotating tool (1) which is brought into engagement with the workpiece via the control of NC axes (X, Y, Z, A, B, C) of the gear cutting machine, and deviations from workpiece to workpiece are compensated by a respective different control of at least one of the NC axes (X) of the gear cutting machine, wherein the tool (1) is shifted by a certain distance (Z) along its axis of rotation in the course of the machining of a plurality of workpieces, and in particular on a change between workpieces, to bring another point of the tool into engagement with the workpiece,
**characterized in that**
the different control of at least one of the other NC axes of the gear cutting machine takes place in dependence on the respective shift position of the tool on the machining of the workpieces, with deviations of the tool geometry in the shift direction and/or their influence on the cut gear geometry being determined.

2. A method in accordance with claim 1, wherein deviations of the tool geometry in the shift direction and/or their influence on the cut gear geometry are determined with respect to the tooth thickness.

3. A method in accordance with claim 1 or claim 2, wherein the tool geometry and/or its influence on the cut gear geometry is determined at at least two sampling points which correspond to different shift positions of the tool; wherein advantageously the tool geometry and/or its influence on the cut gear geometry over the shift range of the tool is interpolated with reference to the at least two sampling points to control the NC axes of the gear cutting machine.

4. A method in accordance with either of claims 1, 2 or 3, wherein the tool geometry and/or its influence on the cut gear geometry is input as a function of the shift position by inputting a function, e.g. a straight line, parabola, sine, polynomial or a combination thereof, wherein it is used for calculating the correction function for the control of the NC axes of the gear cutting machine.

5. A method in accordance with one of the preceding claims, wherein a correction of the cut gear geometry of the individual workpiece is carried out in addition to the control for compensating deviations from workpiece to workpiece.

6. A method in accordance with one of the preceding claims, wherein in each case at least one workpiece is machined and measured at at least two, advantageously three, shift positions of the tool at the start of a machining cycle, and wherein the measurement data enter into the control of the NC axes in the following machining cycle.

7. A method in accordance with one of the preceding claims, wherein data on the cut gear geometry enter into the control of the NC axes in dependence on the shift position from the preceding ongoing process evaluation.

8. A method in accordance with one of the preceding claims, wherein data on deviations of the tool geometry along its axis of rotation obtained by a measurement of the tool enter into the control of the NC axes.

9. A gear cutting machine for manufacturing gears by means of cutting machining, in particular a hob cutting machine and/or a hob grinding machine, in particular for carrying out a method in accordance with one of the preceding claims,
having a tool mount (5) and a workpiece mount (3) which can each be controlled by means of NC axes (X, Y, Z, A, B, C), with workpieces being able to be machined by means of a rotating tool (1) which is brought into engagement with the workpiece via the control of NC axes of the gear cutting machine,
having a machine control which allows the automatic manufacture of a plurality of identical gears,
wherein the machine control has a correction function by which deviations from workpiece to workpiece are compensated by a respective different control of at least one of the NC axes of the gear cutting machine,
wherein the machine control has a shift function by which the tool can be shifted by a specific distance along its axis of rotation in the course of the machining of a plurality of workpieces, and in particular on a change between workpieces, to bring a different point of the tool into engagement with the workpiece,
**characterized in that**
the different control of at least one of the other NC axes of the gear cutting machine takes place by the correction function in dependence on the respective shift position of the tool, with deviations of the tool geometry in the shift direction and/or their influence on the cut gear geometry being able to be determined.

10. A control program for a gear cutting machine for carrying out a method in accordance with one of the claims 1 to 8.

## Revendications

1. Procédé de fabrication d'une pluralité de roues dentées identiques par usinage par enlèvement de matière, en particulier par taille en développante ou par rectification par génération, sur une machine à tailler les engrenages, des pièces à usiner étant usinées au moyen d'un outil en rotation, qui est amené en prise avec la pièce à usiner par le biais de la commande d'axes CN (X, Y, Z, A, B, C) de la machine à tailler les engrenages, et des écarts entre les pièces à usiner étant compensés par une commande respectivement différente d'au moins un des axes CN (X) de la machine à tailler les engrenages, l'outil (1) étant décalé au cours de l'usinage de plusieurs pièces à usiner, et en particulier lors d'un changement entre les pièces à usiner, sur une certaine distance (Z) le long de son axe de rotation pour amener un autre endroit de l'outil en prise avec la pièce à usiner,
**caractérisé en ce que**
la commande différente d'au moins un des autres axes CN de la machine à tailler les engrenages lors de l'usinage des pièces à usiner est effectuée en fonction de la position de décalage respective de l'outil, des écarts de la géométrie de l'outil dans la direction de décalage et/ou leur influence sur la géométrie de la denture étant déterminés.

2. Procédé selon la revendication 1, dans lequel des écarts de la géométrie de l'outil dans la direction de décalage et/ou leur influence sur la géométrie de la denture sont déterminés en ce qui concerne l'épaisseur de dent.

3. Procédé selon la revendication 1 ou 2, dans lequel la géométrie de l'outil et/ou son influence sur la géométrie de la denture est déterminée en au moins deux points d'appui, qui correspondent à différentes positions de décalage de l'outil, la géométrie de l'outil et/ou son influence sur la géométrie de la denture étant, de manière avantageuse, interpolée sur la zone de décalage de l'outil en s'appuyant sur les au moins deux points d'appui pour la commande des axes CN de la machine à tailler les engrenages.

4. Procédé selon la revendication 1, 2 ou 3, dans lequel la géométrie de l'outil et/ou son influence sur la géométrie de la denture est entrée en entrant une fonction, par exemple une droite, une parabole, un sinus, un polynôme ou une combinaison de ceux-ci, comme fonction de la position de décalage, celle-ci étant prise en compte pour le calcul de la fonction de correction pour la commande des axes CN de la machine à tailler les engrenages.

5. Procédé selon l'une des revendications précédentes, dans lequel, outre la commande pour compenser les écarts entre les pièces à usiner, une correction de la géométrie de la denture de la pièce à usiner individuelle est effectuée.

6. Procédé selon l'une des revendications précédentes, dans lequel, au début d'un cycle d'usinage, au moins une pièce à usiner est usinée et mesurée respectivement en au moins deux, avantageusement trois, positions de décalage de l'outil, et dans lequel les données de mesure entrent dans la commande des axes CN dans le cycle d'usinage suivant.

7. Procédé selon l'une des revendications précédentes, dans lequel des données concernant la géométrie de la denture en fonction de la position de décalage provenant de l'évaluation de processus effectuée précédemment entrent dans la commande des axes CN.

8. Procédé selon l'une des revendications précédentes, dans lequel des données obtenues par une mesure de l'outil concernant des écarts de la géométrie de l'outil le long de son axe de rotation entrent dans la commande des axes CN.

9. Machine à tailler les engrenages destinée à fabriquer des roues dentées par usinage par enlèvement de matière, en particulier fraise-mère développante et/ou rectifieuse par génération, en particulier destinée à exécuter un procédé selon l'une des revendications précédentes,
comprenant un logement d'outil (5) et un logement de pièce à usiner (3), qui peuvent être respectivement commandés au moyen d'axes CN (X, Y, Z, A, B, C), des pièces à usiner pouvant être usinées au moyen d'un outil (1) en rotation, qui est amené en prise avec la pièce à usiner par le biais de la commande d'axes CN de la machine à tailler les engrenages,
comprenant une commande de machine, qui permet la fabrication automatique d'une pluralité de roues dentées identiques,
la commande de machine comportant une fonction de correction, par laquelle des écarts entre les pièces à usiner sont compensés par une commande respectivement différente d'au moins un des axes CN de la machine à tailler les engrenages,
la commande de machine comportant une fonction de décalage, par laquelle l'outil peut être décalé sur une certaine distance le long de son axe de rotation au cours de l'usinage de plusieurs pièces à usiner, et en particulier lors d'un changement entre les pièces à usiner, pour amener un autre endroit de l'outil en prise avec la pièce à usiner,
**caractérisée en ce que**,
par la fonction de correction, la commande différente d'au moins un des autres axes CN de la machine à tailler les engrenages est effectuée en fonction de la position de décalage respective de l'outil, des écarts de la géométrie de l'outil dans la direction de décalage et/ou leur influence sur la géométrie de la denture pouvant être déterminés.

10. Programme de commande destiné à une machine à tailler les engrenages pour exécuter un procédé selon l'une des revendications 1 à 8.
